# EUROPEAN PATENT SPECIFICATION

(11) **EP 0 475 369 B1**
(45) Date of publication and mention of the grant of the patent: **22.02.1995**
(21) Application number: 91115310.4
(22) Date of filing: 10.09.1991
(51) Int. Cl.: G01M 11/00, G01B 11/10, C03C 25/02

(54) **Apparatus for the measuring and controlling the eccentricity of the coloured coating layer of optical fibres**
Vorrichtung zum Messen und Überwachen der Exzentrizität des gefärbten Überzuges von optischen Fasern
Appareil pour mesurer et contrôler l'excentricité du revêtement de couleur des fibres optiques

(30) Priority: 10.09.1990 IT 6767790
(43) Date of publication of application: 18.03.1992
(73) Proprietor: SIP SOCIETA ITALIANA PER l'ESERCIZIO DELLE TELECOMUNICAZIONI P.A., 10122 Torino (IT)
(72) Inventor: Parisi, Giuseppe, Torino (IT)
(74) Representative: Riederer Freiherr von Paar zu Schönau, Anton

(56) References cited:
- EP-A- 0 294 889
- DE-B- 2 402 480
- FR-A- 2 466 747
- US-A- 4 042 723
- US-A- 4 952 226

## Description

The present invention relates to fabricating optical fibres used for the transmission of light radiations in optical telecommunications systems and more particularly it concerns an apparatus for measuring and controlling the eccentricity of the coloured coating layer of optical fibres.

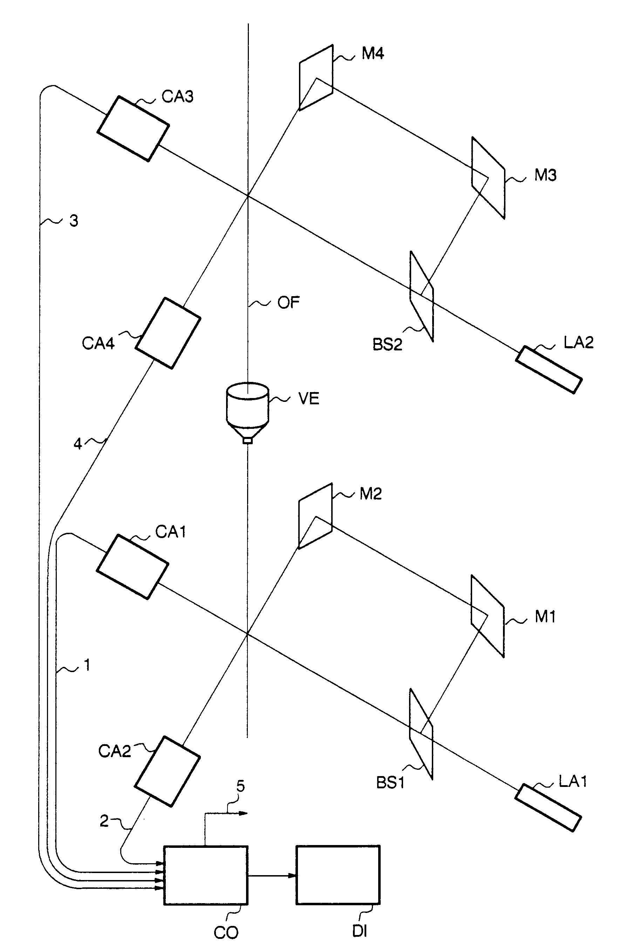

It is known that during the drawing process the optical fibres to be used in the telecommunications domain are covered with some layers of organic material in order to protect their surface. The optical fibre, with a standard diameter of 125 »m, is covered up till it reaches a diameter of about 200 »m with a primary soft coating with a low coefficient of elasticity. Then, still during the drawing step a further secondary rigid coating with higher coefficient of elasticity is deposited. The choice of the coating layer thickness is particularly critical, since the origin of mechanical stresses in the fibre which can give rise to microbendings depends on it. Said fibre deformations cause a loss in the light signal transmission, so that they have to be avoided as much as possible.

Finally, before fabricating a cable containing a plurality of optical fibres, each fibre is submitted to a further coating operation with a coloured resin layer, which raises its external diameter to about 265 »m. The latter coating serves to establish a code for recognizing each fibre among those contained in the cable. The materials used for the coating are generally mixtures of acrylic monomers and oligomers, duly enriched, which after deposition are made to polymerize by ultraviolet radiation.

Optical and mechanical fibre characteristics are highly affected by the coating characteristics, such as layer thickness and its concentricity with respect to the fibre, the polymer type, the degree of polymerization achieved, ageing, etc. Namely, an eccentricity of the coloured coating layer exceeding 5% can cause nonuniformity in the strains acting on the fibre sufficient to induce microbendings. Such phenomenon can be emphasized at low temperatures (-20 °C), where the most of polymers, being below its vitreous transition temperature, exerts with difficulty and differently from layer to layer the internal stresses, affecting significantly the optical fibre characteristics. Possible eccentricities of the lower layers might to some extent be compensated by the coloured layer, such correction by a real-time control having however not yet been considered.

Primary and secondary coating eccentricity measurement is usually carried out during fibre drawing, so as to permit a ready adjustment of the devices acting on the mutual location between fibre and deposition nozzle for coating materials in case of a concentricity error. The measurement method described e.g. in the article entitled "High-Speed Measurement and Control of Fiber-Coating Concentricity" written by D.H.Smithgall and R.R.Frazee and issued in The Bell System Technical Journal, November 1981, pages 2065-2080, consists of illuminating the coated fibre with a coherent light radiation and of examining the symmetry of obtained interference fringes.

The light radiation, emitted by a laser source operating in the visible spectrum portion, is split into two beams and by means of some mirrors each beam is sent along perpendicular directions towards the fibre, perpendicularly to its axis, so as to detect concentricity errors, whatever the fibre location. The interference fringes relevant to the two orthogonal directions are displayed on two screens placed behind the fibre and are taken by two TV cameras for a further processing of the corresponding electrical signals.

A similar method, described in the article entitled "Geometrical Uniformity of Plastic Coating on Optical Fibers" written by H.M.Presby and issued in The Bell System Technical Journal, December 1976, pages 1525-1537, analyzes the interference fringes obtained on screens placed on the same side of the light source, by using light reflected by the fibre surface, instead of transmitted light.

A similar method is known from US-A-4 042 723.

US-A-4 952 226 describes the adjustment of a carbon coating and possibly further a polymer coating on an optical fibre, used to hermetically seal the fibre mainly against permeation of water. A transversely inciding laser beam is forwardly scattered, and the energy or intensity of the forward-scattered light is used for indicating the residual transparency and thus the thickness of the carbon coating.

The document DE-B2-24 02 480 describes a method for measuring the centering of an electric wire core in an insulating sheeth by evaluating a shadow image of the core and sheeth. It is necessary that the core of the cable to be measured is opaque and the sheeth is transparent for the used radiation. The measurement is grounded on a comparison of the intensity of the radiation crossing the cable, wherein only large differences can be measured.

Methods used to measure transparent primary and secondary coating thickness or eccentricity can not be directly used to measure the coloured resin layer eccentricity, since the pigments used for colouring absorb light just in the spectral interval at which the measurement takes place and possible eccentricities of the lower coatings are not taken into account. No interference patterns are obtained either in transmission, or in reflection. The test on the eccentricity of the coloured layer is carried out off line, by incorporating a fibre trunk into a block of transparent resin, e. g. by carrying out a section of the block perpendicular to the fibre axis so as to lap the fibre end face and afterwards by observing it with a microscope. This method obviously does not permit a continuous measurement of the coloured layer characteristics, nor an adjustment of the devices provided for the resin deposition during the process.

Said disadvantages are overcome by the apparatus for measuring and controlling the eccentricity of the coloured coating layer of optical fibres, provided by the present invention, which allows a continuous on-line measurement of the coloured layer eccentricity and high-speed control of the devices envisaged for its deposition in order to make possible corrections.

The foregoing and other characteristics of the present invention will be made clearer by the following description of a preferred embodiment thereof given by way of a non-limiting example, and by the annexed drawing which is a schematic representation of the apparatus provided by the invention.

The apparatus operation is based on the fact that pigmented polymers, used for the embodiment of the coloured layer, have the characteristic of being practically transparent in the portion of optical spectrum ranging from 850 and 2500 nm, belonging to the near infra-red. Therefore the apparatus uses as a light source a laser capable of emitting in this spectrum portion, namely an Nd-YAG laser, which emits at the wavelength of 1064 or 1319 nm, an HeNe laser, which emits at the wavelength of 1150 or 1520 nm, or a semiconductor laser which can be chosen with emission wavelengths comprised between 850 and 900, 1280 and 1320 or 1480 and 1600 nm.

A laser of the type above, denoted by LA1 in the figure, emits a monochromatic beam which, after traversing a semitransparent mirror BS1, is partly transmitted and impinges upon the optical fibre OF perpendicularly to the axis, and is partly reflected towards a first mirror M1, then towards a second mirror M2 and finally towards the optical fibre OF, perpendicularly to the fibre axis and to the axis of the other portion of the optical beam.

At the point wherein the two beams encounter the optical fibre the coloured coating layer has already been deposited, since the fibre has passed through a nozzle VE, containing non-polymerized resins. As a consequence, on the screens of two TV cameras CA1 and CA2, placed along the directions of the two optical beams, two interference patterns are originated which are more or less symmetrical with respect to a central brighter line, according to the coloured coating layer eccentricity. TV cameras CA1 and CA2, sensitive to the wavelength of the beam emitted by laser LA1, supply on the corresponding output wires 1 and 2 electrical signals for the successive processing operations.

Upstream of nozzle VE the fibre not yet coloured is submitted to a measurement analogous to the one discussed in order to check the concentricity of the primary and secondary coatings. To this aim a laser of the previous type, or a laser with emission in the visible portion of the optical spectrum can be used, namely a HeNe laser with 632 nm emission. Such a laser, denoted by LA2 in the figure, emits a monochromatic beam, which, after traversing a semitransparent mirror BS2, is partly transmitted and impinges upon the optical fibre OF perpendicularly to the axis, and is partly reflected towards a first mirror M3, then towards a second mirror M4 and finally towards the optical fibre OF, perpendicularly to the fibre axis and to the axis of the other portion of the optical beam.

The illuminated fibre generates on the screens of two TV cameras CA3 and CA4, placed along the directions of the optical beams, two interference patterns more or less symmetrical with respect to the brighter central line, according to the eccentricity of primary and secondary coatings. TV cameras CA3 and CA4, sensitive to wavelength of the beam emitted by laser LA2, supply on the corresponding output wires 3 and 4 electrical signals which, with those present on wires 1 and 2, are led to a processing unit CO.

This processing unit CO drives a display unit D1 which permits the operator to visually control the trend of fibre colouring process, and supplies on connection 5 electrical signals apt to adjust the devices acting on the mutual location between fibre OF and the deposition nozzle for coating materials VE, so as to automatically make the necessary corrections in case of a concentricity error.

Disposing of the information on the eccentricity before and after the deposition of the coloured coating, it is possible to adjust the apparatus so as to compensate for the possible eccentricity in the primary and secondary coating with opposite concentricity of the coloured layer or deposit a coloured layer perfectly concentric with the primary and secondary coatings.

It is clear that what described has been given only by way of a non-limiting example. Variations and modifications are possible without going out of the scope of the claims. E.g., the apparatus can be used analogously to what described also by using the interference patterns obtained from the light reflected by the coating layer, instead of the transmitted light.

## Claims

1. Apparatus for on-line measuring and controlling the eccentricity of a coating layer of an optical fibre by the generation of interference patterns, comprising a first laser light source (LA1) which emits light being split into two monochromatic light beams the paths of which cross the fibre (OF) downstream of means (VE) for the deposition of the coating layer perpendicularly to each other and to the optical fibre axis and pass on each to one of a first pair of TV cameras (CA1, CA2) which are sensitive to the light beams and supply on first output wires (1, 2) electric signals representative of the obtained interference patterns occuring by the interference of the two light beams crossing the fibre, characterized in that the coating to be measured is a coloured coating layer deposited on primary and secondary coatings of the fibre, and in that the apparatus comprises upstream of the means (VE) for the deposition of the coloured coating layer a further laser light source (LA2) which sends onto the fibre (OF) two light beams perpendicular to each other and with respect to the optical fibre axis, generating interference patterns representing the eccentricity of the primary and secondary coatings and taken by a second pair of TV cameras (CA3, CA4), sensitive to light signals emitted by said further laser light source (LA2) and able to supply on second output wires (3, 4) corresponding electric signals, at least the first light source (LA1) operating in the spectral region of the near-infrared, and in that the electric signals present on wires (1, 2) outgoing from the first pair of TV cameras (CA1, CA2) and the electric signals present on wires (3, 4) outgoing from the second pair of TV cameras (CA3, CA4) are supplied to a processing unit (CO), apt to drive a display unit (D1) and to supply on a connection (5) electric signals apt to adjust the devices acting on the reciprocal position between the fibre (OF) and the means (VE) for depositing the coloured layer.

## Patentansprüche

1. Vorrichtung für die laufende Messung und Überwachung der Exzentrizität eines Überzugs einer optischen Faser durch die Erzeugung von Interferenzmustern, mit einer ersten Laserlichtquelle (LA1), die Licht emittiert, das in zwei monochromatische Lichtbündel gespalten wird, deren Wege die Faser (OF) hinter Einrichtungen (VE) für die Aufbringung des Überzugs im rechten Winkel zu einander und zur Achse der optischen Faser schneiden und jeweils zu einer von einem ersten Paar von TV-Kameras (CA1, CA2) fortschreiten, die für das Lichtbündel empfindlich sind und an ersten Ausgangsleitern (1, 2) elektrische Signale abgeben, die die erhaltenen, durch die Interferenz der beiden die Faser schneidenden Lichtbündel auftretenden Interferenzmuster wiedergeben, dadurch gekennzeichnet, daß der zu messende Überzug ein gefärbter Überzug ist, der auf einem primären und einem sekundären Überzug der Faser aufgebracht wird, und die Vorrichtung vor den Einrichtungen (VE) für die Aufbringung des gefärbten Überzugs eine weitere Laserlichtquelle (LA2) umfaßt, die auf die Faser (OF) zwei zueinander und in bezug zur Achse der optischen Faser rechtwinklige Lichtbündel sendet, die die Exzentrizität der primären und der sekundären Überzüge wiedergebende Interferenzmuster erzeugen, die die von einem zweiten Paar von TV-Kameras (CA3, CA4) aufgenommen werden, die für die von der weiteren Laserlichtquelle (LA2) emittierten Lichtsignale empfindlich sind und dazu geeignet sind, an zweiten Ausgangsleitern (3, 4) entsprechende elektrische Signale abzugeben, wobei wenigstens die erste Wellenlänge (LA1) im Spektralbereich des nahen Infrarot arbeitet, und daß die elektrischen Signale auf den Leitern (1, 2), die von den beiden ersten TV-Kameras (CA1, CA2) ausgehen, und die elektrischen Signale auf den Leitern (3, 4), die von den beiden zweiten TV-Kameras (CA3, CA4) ausgehen, einer Verarbeitungseinheit (CO) eingegeben sind, die eine Sichteinheit (DI) treiben kann und auf einer Verbindung (5) elektrische Signale zum Justieren der auf die gegenseitige Stellung zwischen der Faser (OF) und den Einrichtungen (VE) für die Aufbringung des gefärbten Überzugs wirkenden Vorrichtungen liefert.

## Revendications

1. Equipement pour la mesure en ligne et le contrôle de l'excentricité d' un revêtement d'une fibre optique par la génération des figures
d'intérference, comprenant une première source lumineuse laser (LA1) qui émet de la lumière à être divisée en deux faisceaux lumineux monochromatiques dont les trajets croisent la fibre (OF) en aval de moyens (VE) pour la déposition du revêtement
perpéndiculairement entre eux et à l'axe de la fibre optique et continuent chacun vers une d'une première paire de cameras de télévision (CA1, CA2) qui sont sensibles aux faisceaux lumineux et fournissent sur des premiers fils de sortie (1, 2) des signaux électriques représentatifs des figures d'intérference obtenues qui se sont produites par l'intérference des deux faisceaux lumineux croisant la fibre,
caractérisé en ce que le revêtement à mesurer est un
revêtement coloré déposé sur des revêtements primaire et secondaire de la fibre, et en ce que l'equipement comprend en amont des moyens (VE) pour la déposition du revêtement coloré une autre
source lumineuse laser (LA2) qui envoie sur la fibre (OF) deux faisceaux lumineux perpéndiculaires entre eux et à l'axe de la fibre optique, engendrant des figures d'intérference qui représentent l'excentricité des revêtements primaire et secondaire et sont filmés par une deuxième paire de cameras de télévision (CA3, CA4), sensibles aux signaux lumineux émis par l'autre source lumineuse laser (LA2) et capables de fournir sur des seconds fils de sortie (3, 4) des signaux électriques correspondants, la première source lumineuse (LA1) au moins opérant dans la région spectrale du voisin infrarouge, et en ce que les signaux électriques présents sur les fils (1, 2) sortant de la première paire de cameras de télévision (CA1, CA2) et les signaux électriques présents sur les fils (3, 4) sortant de la seconde paire de cameras de télévision (CA3, CA4) sont envoyés à une unité d'élaboration (CO), apte à piloter une unité de visualisation (DI) et à fournir sur une connexion (5) des signaux électriques aptes à régler les disposifs qui agissent sur la position réciproque entre la fibre (OF) et les moyens (VE) pour le dépôt du
revêtement coloré.
